# EUROPEAN PATENT APPLICATION

(11) **EP 2 146 106 A1**
(43) Date of publication of application: **20.01.2010**
(21) Application number: 08740623.7
(22) Date of filing: 18.04.2008
(51) Int. Cl.: F16C 33/56, F16C 9/04, F16C 19/26, F16C 19/44

(54) **ROLLING BEARING**

(30) Priority: 24.04.2007 JP 2007114399
(71) Applicant: NTN Corporation, Osaka-shi, Osaka 550-0003 (JP)
(72) Inventor: The designation of the inventor has not yet been filed
(74) Representative: White, Duncan Rohan
(86) International application number: PCT/JP2008/057568
(87) International publication number: WO 2008/133194

(57) **Abstract**

It is an object of the present invention to provide a rolling bearing in which a film formed on a surface of a retainer is difficult to peel or a metal component is difficult to dissolve even when the rolling bearing is used in environment where the rolling bearing contacts lubricating oil containing sulfur-based additives. A rolling bearing (1) having a plurality of rolling elements (3) and a retainer (2) retaining the rolling elements (3) is used in environment in which the rolling bearing contacts lubricating oil containing sulfur-based additives. A metal film difficult to peel or dissolve in the environment is formed on a surface of the retainer (2). The metal film is a copper alloy film and particularly consists of a copper-tin alloy plated film.

## Description

### TECHNICAL FIELD

The present invention relates to a rolling bearing and more particularly to a rolling bearing having a film, formed on a retainer thereof, which is not attacked by lubricating oil containing sulfur-based additives.

### BACKGROUND ART

The two-cycle engine has a piston making a linear reciprocating motion by combustion of a mixed gas, a crankshaft outputting a rotational motion, and a connecting rod connecting the piston and the crankshaft to each other to convert the linear reciprocating motion to a rotational motion.

The connecting rod has a large-end portion at a lower portion of a straight rod and a small-end portion at an upper portion thereof. The crankshaft and a piston pin coupling the piston and the connecting rod to each other are rotatably supported at the large-end portion of the connecting rod and at the small-end portion of the connecting rod respectively via roller bearings mounted on engaging holes respectively. The roller bearing supporting the rotational shaft is constructed of a plurality of rollers and a retainer retaining the rollers.

The roller bearings, mounted on the engaging holes formed at the small-end portion of the connecting rod and the large-end portion thereof, which support the piston pin and the crankshaft respectively are capable of receiving a high load, although a projected area thereof is small. As the roller bearing, a needle roller bearing having a high rigidity is used. The needle roller bearing includes a plurality of needle rollers and a retainer retaining a plurality of the needle rollers. The retainer is provided with pockets for retaining the needle rollers respectively. A columnar portion positioned between the pockets retains the interval between the needle rollers. To decrease a load applied to the needle roller bearing owing to rotations of the needle rollers and rotations thereof on the center of the retainer, the needle roller bearing disposed at the small-end portion of the connecting rod and the needle roller bearing disposed at the large-end portion thereof are used by guiding an outside-diameter surface of the retainer, namely, by positively bringing the outside-diameter surface of the retainer into contact with the inside-diameter surface of the engaging hole formed at the small-endportion of the connecting rod and the large-end portion thereof.

On the other hand, in the ordinary rolling bearing, the inside thereof is sealed with an inner ring, an outer ring, and a sealing member. The inside of the bearing is provided with rolling elements and a retainer. Grease is filled inside the bearing. The rolling elements and the retainer are always lubricated with the grease. On the other hand, because the above-described needle roller bearing is provided with none of the inner ring, the outer ring, and the sealing member, the inside of the bearing is not sealed, and the grease cannot be filled inside the bearing. Therefore when the needle roller bearing rotates, it is necessary to always supply lubricating oil to a sliding portion by a pump or the like.

Because the pump or the like starts to operate simultaneously with a start of the rotation of the needle roller bearing, the lubricating oil does not spread to the entire needle roller bearing immediately after the needle roller bearing starts to rotate. Thus a sufficient lubrication is not accomplished. Therefore friction is generated to a high extent between the retainer and the needle roller. Thereby wear occurs on the surface of the retainer and that of the needle roller, and on the outside-diameter surface of the retainer and the inner-diameter surface of the housing of the bearing. In the worst case, there is a fear that both seize on each other.

Therefore to prevent wear and seizing which occur immediately after the needle roller bearing starts to rotate, an art of forming a film having lubricating property on the surface of the retainer in advance is proposed.

For example, a method of forming a hard film of diamond-like carbon (hereinafter referred to as DLC) on the guide surface of the rolling elements of the retainer made of the steel material having the hard layer formed on the surface thereof by a carburizing process by using a sputtering method and thereafter forming a film of a soft metal such as silver on the film of the DLC (see patent document 1) is known. According to the description made in the patent document 1, the film of the soft metal decreases the friction between the retainer and the needle roller and the friction between the outside-diameter surface of the retainer and the inside-diameter surface of the housing. Therefore it is possible to prevent the seizing of the retainer and the needle roller even at the time immediately after the start of the rotation although the lubrication is insufficient at this time. Further even though the film of the soft metal wears with its use, the DLC film disposed under the film of the soft metal is newly exposed and prevents the wear.

An art of directly forming the film of the soft metal on the surface of the retainer by a plating method is proposed. For example, a method of forming a silver-plated film having a thickness of 25 to 50µm on the surface of low carbon steel is known (see patent document 2). According to the description made in the patent document 2, the silver-plated film decreases the friction between the retainer and the needle roller and the friction between the outside-diameter surface of the retainer and the housing. Therefore as described above, the occurrence of seizing can be prevented even at the time immediately after the rotation starts in an insufficient lubrication. Similarly to the silver-plated film, the copper-plated film has an operation of decreasing the friction between the retainer and the needle roller. Thus the copper-plated film is capable of preventing seizing.

But in the method described in the patent document 1, after the soft metal wears and disappears, the hard film is exposed, and the inside-diameter portion of the housing slides on the hard film. In this case, although the retainer does not wear, there is a fear that the inside-diameter portion of the housing is worn by the hard film formed on the surface of the retainer. From the standpoint of the production, because the carburizing processing is carried out on the retainer, the DLC film is formed by a sputtering apparatus, and the soft metal film is formed, operation steps are complicated and many steps are required. Further the sputtering apparatus is expensive and provides an unfavorable production efficiency. Therefore the processing to be performed by using the sputtering apparatus costs high.

In the method described in the patent document 2, in the lubricating system containing the sulfur-based additive, the silver-plated film formed on the surface of the retainer binds with the sulfur component contained in the lubricating oil to form silver sulfide. The silver sulfide coats the surface of the silver-plated film. Because the silver sulfide is more frail than silver, the film peels or is inferior in its oil resistance. Thus the film is dissolved in the lubricating oil. Consequently the friction between the outside-diameter surface of the retainer from which the silver-plated film disappears and the inside-diameter surface of the housing increases and thus seizing is easy to occur. Similarly, copper sulfide is formed from the copper-plated film, which poses a problem that owing to the peeling and dissolution of the film, the lubricating property of the retainer deteriorates.
Patent document 1: Japanese Patent Application Laid-Open No. 2005-147306
Patent document 2: Japanese Patent Application Laid-Open No. 2002-195266

### DISCLOSURE OF THE INVENTION

### PROBLEM TO BE SOLVED BY THE INVENTION

The present invention has been made to cope with the above-described problems. It is an object of the present invention to provide a rolling bearing in which a film formed on a surface of a retainer is difficult to peel or a metal component of the film is difficult to dissolve even when the rolling bearing is used in environment where the rolling bearing contacts lubricating oil containing sulfur-based additives.

### MEANS FOR SOLVING THE PROBLEM

A rolling bearing of the present invention has a plurality of rolling elements and a retainer retaining the rolling elements. The rolling bearing is used in environment in which the rolling bearing contacts lubricating oil containing sulfur-based additives. A metal film difficult to peel or dissolve in the environment is formed on a surface of the retainer.

The retainer is a consists of an iron-based metal material. The iron-based metal material is bearing steel, carburized steel, carbon steel for machine structural use, cold rolled steel or hot rolled steel.

The rolling element is roller-shaped and particularly needle roller-shaped.

The metal film is a copper alloy film. Particularly the copper alloy film is a copper-tin alloy plated film.

A weight ratio between copper and tin is: (copper : tin) = (90:10) to (45:55).

As a ground of the copper alloy film, a copper strike plated film is formed.

A thickness of the metal film is 5 to 60µm.

When three specimens each consisting of an SCM415 basematerial, having a dimension of 3mm ×3mm ×20mm (surface area: 258mm²), on which the metal film has been formed are immersed in 2.2g of poly-α-olefin oil containing 1 wt% of zinc dithiophosphate at 150°C for 200 hours, the amount of a component of the metal films which has dissolved in the oil from the specimens is not more than 500 ppm (0.05 wt%) when the amount is measured by an X-ray fluorescence measurement device.

The rolling bearing supports a crankshaft outputting a rotational motion and is mounted on an engaging hole formed at a large-end portion of a connecting rod converting a linear reciprocating motion to a rotational motion.

### EFFECT OF THE INVENTION

A rolling bearing of the present invention has a plurality of rolling elements and a retainer retaining the rolling elements. The rolling bearing is used in environment in which the rolling bearing contacts lubricating oil containing sulfur-based additives. A metal film difficult to peel or dissolve in the environment is formed on a surface of the retainer. Therefore the metal film little peels and the component of the metal film little dissolves in the lubricating oil. Thereby the metal film is capable of maintaining the lubricating property of the retainer for a longer period of time than the conventional metal plating.

Because the metal film is the copper alloy film, the film is more difficult to peel or the copper is more difficult to dissolve in the environment in which the film contacts the lubricating oil than a copper film. By using the copper-tin alloy as the copper alloy, the above-described effect can be enhanced to a higher extent.

Because the rolling element is roller-shaped, the rolling bearing is capable of receiving a high load. By using the needle roller bearing having a high rigidity, the rolling bearing is capable of receiving a higher load.

Because the rolling bearing of the present invention supports the crankshaft outputting the rotational motion and is mounted on the engaging hole formed at the large-end portion of the connecting rod converting the linear reciprocating motion to the rotational motion, the metal film is capable of maintaining the lubricating property of the retainer for a longer period of time than the conventional metal plating, and the friction between the outside-diameter surface of the retainer and the inside-diameter surface of the engaging hole is prevented. Thereby the entire apparatus is allowed to have a long life.

### BRIEF DESCRIPTION OF THE DRAWINGS

Fig. 1 is a vertical sectional view of a two-cycle engine using a rolling bearing of the present invention.
Fig. 2 is a perspective view showing a needle roller bearing which is one embodiment of the rolling bearing of the present invention.
Fig. 3 shows a friction tester.

### EXPLANATION OF REFERENCE NUMERALS AND SYMBOLS

1: needle roller bearing (rolling bearing)
1a: needle roller bearing
1b: needle roller bearing
2: retainer
2a: pocket portion
2b: column portion
3: needle roller (rolling element)
4: cylinder
5: crankcase
6: crankshaft
7: connecting rod
8: piston
9: inlet hole
10: exhaust hole
11: combustion chamber
12: rotational shaft
13: balance weight
14: piston pin
15: large-end portion
16: small-end portion
17: ring-shaped specimen
18: rotational shaft
19: arm portion
20: steel plate
21: air slider
22: load
23: load cell
24: felt pad

### BEST MODE FOR CARRYING OUT THE INVENTION

As a result of energetic studies of a rolling bearing having a metal film difficult to dissolve in environment where the rolling bearing contacts lubricating oil containing a sulfur component, it has been found that when a film formed by alloying a low sulfur-resistant metal with a sulfur-resistant metal is immersed in the lubricating oil containing the sulfur component, the low sulfur-resistant metal is difficult to dissolve in the lubricating oil. The present invention is based on this knowledge.

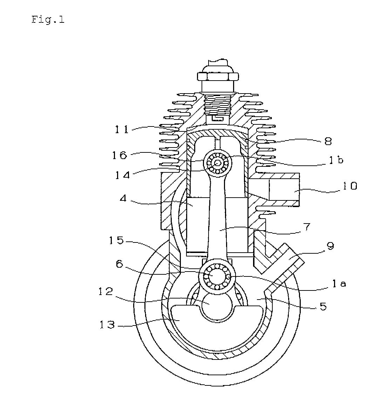

The use form of the rolling bearing of the present invention is described below with reference to the drawings. Fig. 1 is a vertical sectional view of a two-cycle engine using a needle rolling bearing as the rolling bearing of the present invention. As shown in Fig. 1, the two-cycle engine has a piston 8 making a linear reciprocating motion by the combustion of a mixed gas of gasoline and lubricating oil which is engine oil, a crankshaft 6 outputting a rotational motion, and a connecting rod 7 connecting the piston 8 and the crankshaft 6 to each other to convert the linear reciprocating motion to the rotational motion. The crankshaft 6 rotates on a rotational shaft 12. A balance weight 13 takes balance in the rotation.

The connecting rod 7 has a large-end portion 15 at a lower portion of a straight rod and a small-end portion 16 at an upper portion thereof. The crankshaft 6 is rotatably supported via a needle roller bearing 1a mounted on an engaging hole of the large-end portion 15. A piston pin 14 coupling the piston 8 and the connecting rod 7 to each other is rotatably supported via a needle roller bearing 1b mounted on an engaging hole of the small-end portion 16.

After the mixed gas of the gasoline and the lubricating oil is fed froman inlet hole 9 to a crankcase 5, the mixed gas is introduced into a combustion chamber 11 disposed above a cylinder 4 according to a vertical motion of the piston 8 and burnt. A burnt exhaust gas is discharged from an exhaust hole 10.

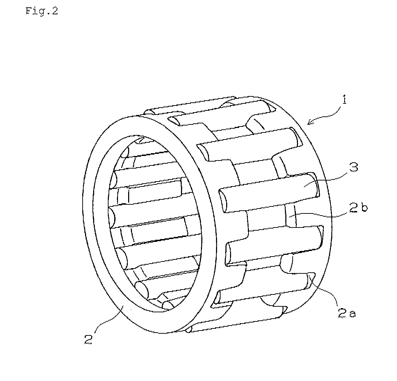

Fig. 2 is a perspective view showing a needle roller bearing which is one embodiment of the rolling bearing of the present invention. As shown in Fig. 2, a needle roller bearing 1 is constructed of a plurality of needle rollers 3 and a retainer 2 retaining the needle rollers 3 at regular or irregular intervals. The needle roller bearing is not provided with an inner ring nor an outer ring. The crankshaft 6 and the piston pin 14 are directly inserted into the inside-diameter side of the retainer 2. The outside-diameter side of the retainer 2 is fitted in the engaging hole, of the connecting rod 7, which is a housing (see Fig. 1). Because the needle roller bearing 1 does not have the inner ring nor the outer ring and the needle roller 3 having a small diameter relative to its length is used as a rolling element, the needle roller bearing 1 is smaller than ordinary rolling bearings having the inner and outer rings.

The retainer2 is provided with pockets 2a for holding the needle rollers 3 respectively. Each columnar portion 2b disposed between the pockets holds an interval between the needle rollers 3. A metal film which is described later is formed on the surface of the retainer 2. The surface of the retainer 2 on which the metal film is formed contacts the lubricating oil. It is preferable to form the metal film on the entire surface of the retainer 2 including the surfaces of the pockets 2a which contact the needle rollers.

In addition to the surface of the retainer 2, it is possible to form a similar metal film on the surface of the needle roller 3 which is a rolling element or the inside-diameter surface of the engaging hole of the connecting rod 7.

The rolling bearing of the present invention is applicable to environment in which the rolling bearing contacts the lubricating oil containing sulfur-based additives. As environment in which the rolling bearing contacts the lubricating oil, as described above, it is possible to list a case in which the rolling bearing mounted on the two-cycle engine or a four-cycle engine contacts the mixed gas of the gasoline and the lubricating oil which is the engine oil or the engine oil and a case in which the rolling bearing contacts oil when the pockets of the retainer thereof is lubricated.

The sulfur-based additive means an additive containing a sulfur-based compound. As the kind of the additive, an antioxidant, an anti-corrosive agent, an extreme-pressure agent, a detergent-dispersant, a metal deactivator, an anti-wear agent, and the like are listed.

As the lubricating oil to which the additive containing the sulfur-based compound is added, mineral oil, synthetic oil, ester oil, ether oil, and the like are listed.

As the sulfur-based compound, it is possible to list thiophosphate such as zinc dialkyl dithiophosphate (hereinafter referred to as ZnDTP) and zinc diallyl dithiophosphate, terpene sulfide, phenothiazine, mercaptobenzothiazole, oil sulfonate, alkylbenzene sulfonate, reaction product salt of polybutene-P₂S₅, ammonium salts of organic sulfonic acid, organic sulfonate of alkali earth metals, mercapto fatty acids such as 1-mercapto stearate and metal salts thereof, thiazoles such as 2,5-dimercapto-1,3,4-thiadiazole, 2-mercaptothiadiazole; disulfide compounds such as 2-(decyldithio)-benzimidazole, 2,5-bis(dodecyldithio)-benzimidazole; ester thiocarboxylic compounds such as dilauryl thiopropionate; sulfide grease such as dibenzyldisulfide, diphenyldisulfide, sulfidewave-dutyoil; ester sulfide such as olefin sulfide, fatty ester sulfide; sulfide such as dibenzyl disulfide, alkyl polysulfide, olefin polysulfide, xanthic sulfide; calcium sulfonate; magnesium sulfonate, alkyldithiophosphateamine.

Of the above-described sulfur-based compounds, a compound easy to give influence on the roller bearing for the connecting rod is the ZnDTP.

In the present invention, "peeling or dissolving are difficult to occur in environment in which the rolling bearing contacts the lubricating oil containing the sulfur-based additive" means that when three specimens each consisting of an SCM415 base material, having a dimension of 3mm ×3mm ×20mm (surface area: 258mm²), on which the above-described metal film has been formed are immersed in 2.2g of poly-α-plefin oil containing 1 wt% of the ZnDTP at 150°C for 200 hours, the amount of a component of the metal films which has dissolved in the lubricating oil from the specimens is not more than 500 ppm (0.05 wt%) when the amount is measured by an X-ray fluorescence measurement device.

It is possible to use the metal film formed on the retainer of the rolling bearing of the present invention without limitation in environment where the metal film contacts the lubricating oil containing the sulfur-based additive, provided that the metal film is difficult to peel or the component of the metal film is difficult to dissolve, when the retainer and the housing friction with each other.

As sulfur-resistant metals hard to react with a sulfur component, Sn, Ni, and Cr and alloys of these metals are listed. Even a metal having a low sulfur resistance can be used by forming a film hard to dissolve by alloying the metal having a low sulfur resistance with a sulfur-resistant metal.

Of these metals and alloys, it is preferable to use copper alloys because the copper alloys are inexpensive and can be formed easily and a film can be easily formed therefrom. Of the copper alloys, as a metal which does not form a sulfide, it is preferable to use a copper-tin alloy because tin can be easily alloyed with inexpensive copper and a film can be easily formed from the copper-tin alloy. By plating the surface of the retainer with the copper-tin alloy by using electroplating method, a copper-tin alloy plated film is formed on the surface of the retainer.

In a copper-tin alloy plated film, the weight ratio (weight %) between the copper and the tin is favorably (copper:tin) = (90_{:}10) to (45:55), more favorably (copper:tin) = (85:15) to (50:50), and most favorably (copper:tin) = (80:20) to (55:45). When the weight ratio of the copper is less than 45 wt%, a copper-tin alloy plated film is frail and easily peels from the surface of the retainer. When the weight ratio of the copper is more than 90 wt%, it is difficult to restrain the copper from diluting in the engine oil.

The copper alloy film to be formed on the retainer of the rolling bearing of the present invention may be formed directly on the surface of the base material of the retainer or to improve the adhesion of the copper alloy film to the base material of the retainer and form the copper alloy film stably, it is possible to form the copper alloy film after forming a copper strike plated film as a ground film in advance.

As the method of forming the metal film on the surface of the retainer, in addition to the electroplating, it is possible to adopt known film-forming methods including physical evaporation (PVD) such as electroless plating, vacuum evaporation, ion plating, and sputtering and chemical evaporation (CVD) according to the kind of the film to be formed.

The thickness of the metal film formed on the surface of the retainer is favorably 3 to 100µm and more favorably 5 to 60µm. When the thickness of the metal film is less than 3µm, there is a possibility that the film disappears owing to an initial wear. When the thickness of the metal film is more than 100 µm, the roundness of the retainer deteriorates, which is unpreferable.

Because the rolling bearing of the present invention uses the retainer having the film of a soft metal formed on the surface thereof by post processing, it is possible to use bearing steel, carburized steel, carbon steel for machine structural use, cold rolled steel or hot rolled steel for the body of the retainer. Of these steels, it is preferable to use the carburized steel having a high heat resistance and a rigidity resistant to a high load. As the carburized steel, it is possible to use SCM415 and the like.

Because the rolling element for use in the rolling bearing of the present invention is roller-shaped, the rolling bearing of the present invention is mounted on the engaging hole formed at the small-end portion of the connecting rod and the large-end portion thereof and is capable of supporting the piston and the crankshaft. Although the projected area of the bearing is small, the rolling bearing is capable of receiving a high load. Particularly the rolling bearing using the needle roller having a high rigidity as the rolling element thereof is capable of receiving a higher load than a rolling bearing using a roller as the rolling element thereof.

The rolling bearing of the present invention is the roller bearing which supports the crankshaft outputting the rotational motion, is mounted on the engaging hole formed at the large-end portion of the connecting rod converting the linear reciprocating motion to the rotational motion, and is used by guiding an outside-diameter surface of the retainer having the above-described film. Therefore the film little peels and the metal little dissolves in the lubricating oil. Thereby the film formed on the retainer is capable of maintaining the lubricating property of the retainer for a longer period of time than the conventional metal plating, and the friction between the out side-diameter surface of the retainer and the inside-diameter surface of the engaging hole is prevented. Thereby the entire apparatus is allowed to have a long life.

As shown in Fig. 1, the rolling bearing of the present invention supports the piston pin outputting the linear reciprocating motion and can be mounted on the engaging hole formed at the small-end portion of the connecting rod converting the linear reciprocating motion to the rotational motion.

In addition to the needle roller bearing for the connecting rod, the construction of the rolling bearing of the present invention is applicable to a deep groove ball bearing, an angular contact ball bearing, a cylindrical roller bearing, and a tapered roller bearing.

### EXAMPLE

### Examples 1 through 5 and Comparative Example 3

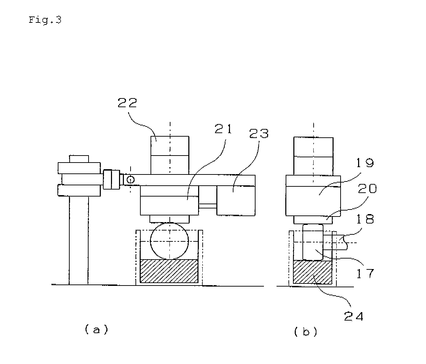

The outside-diameter surface of an SUJ2 ring [outside-diameter: 40mm × inner diameter: 20mm × thickness: 20mm (sub-curvature: R60), surface roughness Ra: 0.7µm by shot blast, 17 in Fig. 3] was plated with a copper-tin alloy by electroplating method to form a film, consisting of the plated copper-tin alloy, which had a thickness of 25µm and a composition shown in table 1. Further as specimens for a lubricating oil immersion test, the surface of an SCM415 square rod (3mm × 3mm × 20mm, surface area: 258mm²) was also electroplated to form a film, consisting of a plated copper-tin alloy, which had a thickness of 25µm. The values of the compositions of the film consisting of the plated copper-tin alloy were obtained by performing a quantitative analysis by using an energy dispersion type X-ray analyzer. The specimens were used for a friction test and a lubricating oil immersion test shown below to measure the friction coefficient of the component of each film and the amount of each metal which dissolved in the lubricating oil. Table 1 shows the results.

### <Friction Test>

Fig.3 shows a friction tester. Fig. 3 (a) and Fig. 3 (b) show a front view and a side view respectively.

A ring-shaped specimen 17 is mounted on a rotational shaft 18, and a steel plate 20 is fixed to an air slider 21 of an arm portion 19. Whale a predetermined load 22 is being applied to the ring-shaped specimen 17 from an upper portion in Fig. 3, the ring-shaped specimen 17 contacts the steel plate 20 with the ring-shaped specimen 17 rotating. Lubricating oil is supplied to an outside-diameter surface of the ring-shaped specimen 17 from a felt pad 24 impregnated with the lubricating oil. A frictional force generated when the ring-shaped specimen 17 is rotated is detected by a load cell 23. After a predetermined period of time elapses, the state of the film formed on the outside-diameter surface of the ring-shaped specimen 17 is visually inspected. Specimens which did not have outstanding wear and peeling are evaluated as "good" and marked by o. Specimens which did not have outstanding wear but had peeling were evaluated as "bad" and marked by Δ.

As the steel plate 20, a carburized steel SCM415 quenched and tempered (Hv 700, surface roughness Ra: 9.01µm) was used. As the lubricating oil, Mobil Verocity Oil No. 3 (VG2 produced by Exxon Mobil Corporation) was used. The load was 50N. The sliding speed was 5.0m/second. The test period of time was 30 minutes- The friction coefficient is indicated as an average of values measured in 10 minutes before the test finished.

### <Lubricating Oil Immersion Test>

After three specimens were immersed in 2.2g of poly-α-olefin oil (LUCNT HC-10 produced by Mitsui Chemicals, Inc) containing 1 wit% of the ZnDTP (LUBRIZOL677A produced by LUBRIZOL ENTERP INC.) for 200 hours at 150°C, the amount of the component of the film which dissolved from the specimens in the lubricating oil was measured by using the X-ray fluorescence measurement device (Rigaku ZSX100e produced by Rigaku Corporation).

### ■ Examples 6, 7 and Comparative Example 4

Processing and evaluation similar to those of the example 1 were carried out except that copper strike plating (plated thickness: 5µm) was formed on the outside-diameter surface of the SUJ2 ring [outside-diameter: 40mm × inner diameter: 20mm × thickness: 20mm (sub-curvature_R60), surface roughness Ra: 0.7µm by shot blast, 17 in Fig. 3] by the electroplating method as a ground film. Table 1 shows the results.

### ■ Comparative Example 1

Copper strike plating (plated thickness: 5µm) was performed as a ground treatment on a specimen similar to that of the example 1 except a film formed thereon by the electroplating method. The surface layer of the specimen was silver-plated (plated thickness: 20µm) by using the electroplating method. The obtained specimen was evaluated in a manner similar to that of the example 1. Table 1 shows the results.

### ■ Comparative Example 2

A specimen similar to that of the example 1 except a film formed thereon was copper-plated (plated thickness: 25µm) by using the electroplating method. The obtained specimen was evaluated in a manner similar to that of the example 1. Table 1 shows the results.

**[Table 1]**

| | Example | | | | | | | Comparative example | | | |
|---|---|---|---|---|---|---|---|---|---|---|---|
| | 1 | 2 | 3 | 4 | 5 | 6 | 7 | 1 | 2 | 3 | 4 |
| Pretreated plating (copper strike plating) | untreated | untreated | untreated | untreated | untreated | treated | treated | treated | untreated | untreated | treated |
| Composition of plated film (wt%) | | | | | | | | | | | |
| Cu | 90 | 80 | 75 | 67 | 62 | 60 | 50 | - | 100 | 95 | 40 |
| Sn | 10 | 20 | 25 | 33 | 38 | 40 | 50 | - | - | 5 | 60 |
| Ag | - | - | - | - | - | - | - | 100 | - | - | - |
| Properties Friction coefficient | 0.06 | 0.05 | 0.04 | 0.03 | 0.02 | 0.03 | 0.05 | 0.03 | 0.08 | 0.08 | 0.12 |
| State of film after friction teat | ○ | ○ | ○ | ○ | ○ | ○ | ○ | ○ | ○ | ○ | △ |
| Dilution amount in immersion test (wt%} | | | | | | | | | | | |
| Cu | 0.05 | 0.02 | 0.01 | 0.01 | 0.01 | 0.01 | 0 | 0 | 0.35 | 0.09 | 0 |
| Sn | 0 | 0 | 0 | 0 | 0 | 0 | 0 | ○ | 0 | 0 | 0 |
| Ag | 0 | 0 | 0 | 0 | 0 | 0 | 0 | 0.06 | 0 | 0 | 0 |

As apparent from the results shown in table 1, in the lubricating oil immersion test, the metal component dissolved in the lubricating oil from the film of the comparative examples 1 and 2 in which the conventional metal plating was carried out. The elution amount of the copper plating was large. Because the comparative example 3 contained a small amount of tin, the elution amount of the copper was large, and the friction efficient was high. Because the comparative example 4 contained a large amount of tin, the elution amount of the copper was very small, but the film peeled during the test, and the friction efficient was high.

On the other hand, in the examples 1 through 7 shown in table 1, because the content of the tin was within the predetermined range, the friction efficient of each specimen was low, and peeling and outstanding wear did not occur during the friction test. In the lubricating oil immersion test, the elution amount of the component of the film in the lubricating oil was very small.

### INDUSTRIAL APPLICABILITY

In the rolling bearing of the present invention, because the predetermined metal film is formed on the surface of the retainer, the rolling bearing is capable of maintaining the lubricating property of the retainer for a long period of time in the environment where the rolling bearing contacts lubricating oil containing the sulfur-based additive. Thus the rolling bearing can be preferably used as the rolling bearing in this environment.

## Claims

1. A rolling bearing, comprising a plurality of rolling elements and a retainer retaining said rolling elements, which is used in environment in which said rolling bearing contacts lubricating oil containing sulfur-based additives,
wherein a metal film difficult to peel or dissolve in said environment is formed on a surface of said retainer.

2. A rolling bearing according to claim 1, wherein said retainer consists of an iron-based metal material.

3. A rolling bearing according to claim 2, wherein said iron-based metal material is bearing steel, carburized steel, carbon steel for machine structural use, cold rolled steel or hot rolled steel.

4. A rolling bearing according to claim 1, wherein said rolling element is roller-shaped.

5. A rolling bearing according to claim 4, wherein said rolling element is needle roller-shaped.

6. A rolling bearing according to claim 1, wherein said metal film is a copper alloy film.

7. A rolling bearing according to claim 6, wherein said copper alloy film is a copper-tin alloy plated film.

8. A rolling bearing according to claim 7, wherein a weight ratio between copper and tin is: (copper : tin) = (90:10) to (45:55) .

9. A rolling bearing according to claim 6, wherein as a ground of said copper alloy film, a copper strike plated film is formed.

10. A rolling bearing according to claim 1, wherein a thickness of said metal film is 5 to 60µm.

11. A rolling bearing according to claim 1, wherein when three specimens each consisting of an SCM415 base material, having a dimension of 3mm × 3mm × 20mm (surface area: 258mm²), on which said metal film has been formed are immersed in 2.2g of poly-α-olefin oil containing 1 wt% of zinc dithiophosphate at 150°C for 200 hours, an amount of a component of said metal films which has dissolved in said oil from said specimens is not more than 500 ppm (0.05 wt%) when said amount is measured by an X-ray fluorescence measurement device.

12. A rolling bearing according to claim 1, which supports a crankshaft outputting a rotational motion and is mounted on an engaging hole formed at a large-end portion of a connecting rod converting a linear reciprocating motion to a rotational motion.
